# EUROPÄISCHE PATENTSCHRIFT

(11) **EP 2 329 195 B1**
(45) Veröffentlichungstag und Bekanntmachung des Hinweises auf die Patenterteilung: **02.11.2016**
(21) Anmeldenummer: 09815669.8
(22) Anmeldetag: 21.09.2009
(51) Int. Cl.: F23M 5/00, F23R 3/00

(54) **MATERIALMISCHUNG ZUR HERSTELLUNG EINES FEUERFESTWERKSTOFFES, FEUERFESTFORMKÖRPER UND VERFAHREN ZU SEINER HERSTELLUNG**
MATERIAL MIXTURE FOR PRODUCING A FIRE-RETARDANT MATERIAL, FIRE-RETARDANT MOULDING BODY AND METHOD FOR ITS MANUFACTURE
MÉLANGE DE MATIÈRE DESTINÉ À LA FABRICATION D'UNE MATIÈRE IGNIFUGE, CORPS IGNIFUGE ET SON PROCÉDÉ DE FABRICATION

(30) Priorität: 29.09.2008 EP 08017130
(43) Veröffentlichungstag der Anmeldung: 08.06.2011
(73) Patentinhaber: Siemens Aktiengesellschaft, 80333 München (DE)
(72) Erfinder: GROTE, Holger, 45478 Mülheim (DE); KOLLENBERG, Wolfgang, 50321 Brühl (DE); NIKASCH, Christian, 45478 Mülheim an der Ruhr (DE); NIKOLAY, Dieter, 56727 Mayen - Hausen (DE)
(86) Internationale Anmeldenummer: PCT/EP2009/062172
(87) Internationale Veröffentlichungsnummer: WO 2010/034680

(56) Entgegenhaltungen:
- EP-A- 1 072 573
- DE-A1- 10 054 125
- DE-B1- 2 745 461

## Beschreibung

Die vorliegende Erfindung betrifft eine Materialmischung zur Herstellung eines Feuerfestwerkstoffes. Daneben betrifft sie einen Feuerfestformkörper für Hochtemperaturgasreaktoren, insbesondere ein Hitzeschildelement für eine Gasturbine, sowie ein Verfahren zum Herstellen des Feuerfestformkörpers.

Die Wände von heißgasführenden Hochtemperaturgasreaktoren, beispielsweise von Brennkammern in Gasturbinenanlagen, erfordern eine thermische Abschirmung ihrer tragenden Struktur gegen Heißgasangriff. Die thermische Abschirmung kann beispielsweise durch eine der eigentlichen Brennkammerwand vorgelagerte Heißgasauskleidung, bspw. in Form eines keramischen Hitzeschildes, realisiert werden. Eine derartige Heißgasauskleidung ist in der Regel aus einer Anzahl von metallischen oder keramischen Hitzeschildelementen aufgebaut, mit denen die Brennkammerwand flächig ausgekleidet ist. Keramische Materialien bieten sich für den Aufbau einer Heißgasauskleidung im Vergleich zu metallischen Werkstoffen aufgrund ihrer hohen Temperaturbeständigkeit, Korrosionsbeständigkeit und niedrigen Wärmeleitfähigkeit idealerweise an. Ein keramischer Hitzeschild ist bspw. in EP 0 558 540 B1 beschrieben.

Wegen materialtypischer Wärmedehnungseigenschaften und der im Rahmen des Betriebs typischerweise auftretenden Temperaturunterschiede - etwa zwischen der Umgebungstemperatur bei Stillstand der Gasturbinenanlage und der maximalen Temperatur bei Volllast - muss die Wärmebeweglichkeit insbesondere keramischer Hitzeschilde in Folge temperaturabhängiger Dehnung gewährleistet sein, damit keine den Hitzeschild zerstörenden Wärmespannungen durch Behinderung der temperaturabhängigen Dehnung auftreten. Zwischen den einzelnen Hitzeschildelementen sind daher Dehnspalte vorhanden, um die Wärmeausdehnung der Hitzeschildelemente zu ermöglichen. Aus Sicherheitsgründen sind die Dehnspalte so ausgelegt, dass sie auch bei maximaler Temperatur des Heißgases nie völlig geschlossen sind. Es ist daher sicherzustellen, dass das Heißgas nicht über die Dehnspalte zur tragenden Wandstruktur der Brennkammer gelangt. Um die Dehnspalte gegen den Eintritt von Heißgas zu sperren, werden diese häufig mit einem in Richtung des Brennkammerinneren strömenden Sperrluftstrom gespült. Als Sperrluft findet in der Regel Luft Verwendung, die gleichzeitig als Kühlluft zum Kühlen von die Hitzeschildelemente haltenden Haltelementen dient, was u.a. zum Auftreten von Temperaturgradienten im Bereich der Kanten eines Hitzeschildelementes führt. Infolge des Spülens der Dehnspalte mit Sperrluft werden die die Spalte begrenzenden Umfangsseiten ebenso wie die Kaltseite der Hitzeschildelemente gekühlt. Andererseits findet an der Heißseite der Hitzeschildelemente ein hoher Wärmeeintrag aufgrund des Heißgases statt. Es stellt sich daher innerhalb eines Hitzeschildelementes eine dreidimensionale Temperaturverteilung ein, die durch einen Temperaturabfall von der Heißseite zur Kaltseite sowie durch eine von zentralen Punkten des Hitzeschildelementes zu den Kanten hin auftretenden Temperaturabfall geprägt ist. Daher kommt es insbesondere bei keramischen Hitzeschildelementen auch ohne die Berührung benachbarter Hitzeschildelemente zu Spannungen auf der Heißseite, welche zu Rissbildungen führen und damit die Lebensdauer der Hitzeschildelemente negativ beeinflussen können.

Typischerweise sind die Hitzeschildelemente in einer Gasturbinenbrennkammer flach ausgebildet und parallel zur Tragstruktur angeordnet. Ein Temperaturgradient, der senkrecht zur Oberfläche der Tragstruktur verläuft, führt dabei nur zu vergleichsweise geringen thermischen Spannungen, solange für das keramische Hitzeschildelement im Einbauzustand eine Vorbeugung in Richtung auf das Innere der Brennkammer ohne Behinderung möglich ist.

Ein zur Tragstruktur parallel verlaufender Temperaturgradient wie derjenige, der von den Umfangsflächen des Hitzeschildelementes ausgehend zum Zentrum des Hitzeschildelementes verläuft, bringt infolge der Steifigkeit plattenähnlicher Geometrien bezüglich Verformungen parallel zu ihrer größten Projektionsfläche rasch erhöhte Thermospannungen mit sich. Diese führen dazu, dass die kalten Kanten der Umfangsflächen infolge ihrer vergleichsweise geringen thermischen Dehnung von heißeren Zentralbereichen, die einer größeren thermischen Dehnung unterworfen sind, unter Zug gesetzt werden. Dieser Zug kann bei Überschreiten der Materialfestigkeit zur Bildung von Rissen führen, die von den Kanten des Hitzeschildelementes ausgehen und in Richtung auf zentrale Bereiche des Hitzeschildelementes verlaufen.

Die Risse vermindern den tragenden Querschnitt des Hitzeschildelementes. Je länger die Risse sind, desto kleiner ist der tragende Restquerschnitt des Hitzeschildelementes. Die thermisch bedingten Risse können sich durch im Betrieb der Gasturbinenanlage auftretende mechanische Belastungen verlängern, was zu einer weiteren Reduzierung des Restquerschnittes
führt und den Austausch des Hitzeschildelementes nötig machen kann. Derartige mechanische Belastungen treten beispielsweise bei oszillierenden Beschleunigungen der Brennkammerwand auf, die durch Verbrennungsschwingungen, also Schwingungen in den Verbrennungsabgasen, verursacht werden können.

Um den Bedarf an Sperrluft - und damit thermisch bedingte Spannungen in Hitzeschildelementen - zu verringern, wurde in EP 1 302 723 A1 vorgeschlagen, Strömungsbarrieren in den Dehnspalten anzuordnen. Dies kann auch zu einer Verringerung des Temperaturgradienten im Bereich der Kanten führen. Das Einbringen von Strömungsbarrieren ist jedoch nicht immer ohne weiteres möglich und erhöht zudem die Komplexität eines Hitzeschildes.

Weiterhin sind Hitzeschildelemente starken korrosiven Belastungen ausgesetzt, welche zu einem die Lebensdauer limitierenden Materialverlust führen. Der bei den keramischen Hitzschildelementen auftretende Materialverlust ist auf eine Kombination aus Korrosion, anschließendem Nachsintern der Oberfläche und erosiver Belastung durch den hohen Massedurchsatz an Heißgas zurückzuführen. Der Materialabtrag ist in der Regel dort am Größten, wo die höchsten Strömungsgeschwindigkeiten des Heißgases herrscht. Bei den heutzutage häufig verwendeten keramischen Hitzeschildern aus Korund und Mullit mit Glasphase ist der Materialverlust im Wesentlichen auf zwei Reaktionen zurückzuführen, nämlich erstens Mullitabbau sowie zweitens Kornwachstum und Nachsinterung. Der im Heißgas vorhandene Wasserdampf führt zum Abbau von Mullit (3Al₂O₃ * 2SiO₂ oder 2Al₂O₃ * 1SiO₂) und Glasphase zu Korund (Al₂O₃) und Siliziumoxid (SiOₓ). Der an der Oberfläche eines Hitzeschildelementes dann vorliegende Korund, sowohl in der Matrix des Hitzeschildelementes, als auch in der Korrosionsschicht der Mullitkörner, zeigt Kornwachstum und Versinterung. Kornwachstum und Versinterung nehmen mit der Betriebdauer zu. Dies führt mit zunehmenden Startzahlen einer Gasturbine zu einer Schwächung der Oberfläche durch Mikrorissbildung. In der Folge werden durch den hohen Massedurchsatz Oberflächenpartikel mitgerissen, was zur Erosion führt. Im Ergebnis wird die Lebensdauer der Hitzeschildelemente durch die Korrosion begrenzt, was einen frühzeitigen Austausch nötig macht. Hinzu kommt, dass im Falle eines Schwerölbetriebs einer Gasturbine Magnesiumoxid als Inhibitor zugeführt wird, was ebenfalls zu einem korrosiven Abtrag der Hitzeschildelemente führt. Ursache hierfür ist eine Reaktion des Korunds im Hitzeschildelement mit dem Magnesiumoxid im Inhibitor zu Spinell als Reaktionsprodukt. Auch dies führt zu einer Lebensdauerverkürzung und zur Notwendigkeit eines frühzeitigen Austausches des Hitzeschildelementes.

Aus DE 27 45 461 ist ein hochfeuerfester Magnesiumaluminat-Spinell (MgAl₂O₄) enthaltender Stein bekannt, der einen Gewichtsanteil von 70 bis 93 % Magnesiumaluminat-Spinell, einen Gewichtsanteil von 2 bis 8 % Aluminiumoxid, einen Gewichtsanteil von 1 bis 9 % Bindemittel und einen Gewichtsanteil von bis zu 27 % hochfeuerfeste Zuschlagstoffe enthält. Als Zuschlagstoffe sind Chrom(III)-Oxid (Cr₂O₃) und Kalzium-Zirkon-Oxid (CaZrO₃) genannt. Zudem kann Schmelzspinell, d. h. Körner aus schmelzgegossenem Spinell, zugegeben werden, um Korrosions- und Thermoschockeigenschaften zu verbessern. In DE2745461 werden CaO-arme Werkstoffe beschrieben, diese haben jedoch noch einen nachweisbaren Si02 Anteil.

DE 27 38 247 beschreibt einen feuerfesten Tonerdezement, der Magnesiumaluminat-Spinell enthalten kann. Die Zugabe von Bindemitteln erleichtert die Formgebung des Tonerdezements. Außerdem können die Erzeugnisse erst während der Anwendung gesintert werden, wodurch die Brennkosten erspart werden. Nachteilig an solchen Wirkstoffen sind aber die deutlich schlechteren Korrosionseigenschaften in korrosivem Gas- und/oder Schmelzumgebung.

DE 102 54 676 A1 beschreibt einen feuerfesten keramischen Formkörper, dessen Gefüge 80 bis 95 % Zirkonoxid (ZrO₂) und 5 bis 20 % Magnesiumaluminat-Spinell bezogen auf die Gesamtmasse umfasst. Die Zugabe des Magnesiumaluminat-Spinells soll hierbei zu einer höheren Thermoschockbeständigkeit führen.

Aus der DE 100 54 125 A1 ist eine Materialmischung zur Herstellung eines Feuerfestwerkstoffes bekannt, welches Spinell und Zirkonoxid aufweist. Hierbei ist vorgesehen, dass vorzugsweise ein Grobkornanteil zwischen 30% und 80% mit einer Korngröße über 0,3mm und ein Feinkornanteil zwischen 10% und 60% mit einer Korngröße unter 0,2mm eingesetzt wird.

Alternative Vorgehensweisen bestehen darin, Hitzeschildelemente aus Metall zu verwenden. Metallische Hitzeschildelemente weisen zwar gegenüber Temperaturschwankungen und mechanischen Belastungen eine höhere Widerstandsfähigkeit als keramische Hitzeschildelemente auf, erfordern jedoch bspw. in Gasturbinenbrennkammern eine aufwändige Kühlung des Hitzeschildes, da sie eine höhere Wärmeleitfähigkeit als keramische Hitzeschildelemente besitzen. Außerdem sind metallische Hitzeschildelemente korrosionsanfälliger und können aufgrund ihrer geringeren Temperaturstabilität nicht so hohen Temperaturen ausgesetzt werden wie keramische Hitzeschildelemente.

Eine erste Aufgabe der Erfindung ist es daher, eine Materialmischung zur Herstellung eines Feuerfestformkörpers zur Verfügung zu stellen, der sich insbesondere zum Herstellen von Hitzeschildelementen für Gasturbinen eignet. Es ist eine zweite Aufgabe der vorliegenden Erfindung, ein vorteilhaftes Verfahren zum Herstellen eines Feuerfestformkörpers wie etwa eines Hitzeschildelementes für eine Gasturbine zur Verfügung zu stellen. Schließlich ist es eine dritte Aufgabe der vorliegenden Erfindung, einen vorteilhaften Formkörper für Hochtemperaturgasreaktoren, beispielsweise ein Hitzeschildelement für Gasturbinen, zur Verfügung zu stellen.

Die erste Aufgabe wird durch eine Materialmischung zur Herstellung eines Feuerfestwerkstoffes gemäß Anspruch 1 gelöst, die zweite Aufgabe durch ein Verfahren zum Herstellen eines Feuerfestformkörpers gemäß Anspruch 4 und die dritte Aufgabe durch einen Feuerfestformkörper gemäß Anspruch 12. Die abhängigen Ansprüche enthalten vorteilhafte Ausgestaltungen der Erfindung.

Die erfindungsgemäße Materialmischung zur Herstellung eines Feuerfestwerkstoffes umfasst Spinell und Zirkonoxid, insbesondere Zirkonoxid mit monokliner Kristallstruktur, auch Baddeleyit genannt. Sie weist einen Grobkornanteil mit einem Gewichtsanteil oberhalb von 50 % und einen Feinkornanteil auf. Der Grobkornanteil weist Körner mit Abmessungen größer 20 µm, vorzugsweise im Bereich zwischen 20 µm und 6 mm und insbesondere im Bereich 100 µm und 6 mm, auf, wohingegen der Feinkornanteil Feinkörner mit Abmessungen kleiner 20 µm aufweist. Als Grobkornanteil kann hierbei insbesondere Magnesiumaluminat-Spinell (MgAl₂O₄) und/oder Sinterspinell und/oder Schmelzspinell vorhanden sein. Unter Sinterspinell ist hierbei ein gesinterter Spinell zu verstehen, der auf eine gewünschte Körnung heruntergebrochen ist, unter Schmelzspinell ein aus einer Schmelze hergestellter und anschließend auf die gewünschte Körnung heruntergebrochener Spinell. Als Feinkornanteil kann insbesondere Zirkonoxid vorhanden sein. Zudem kann als Feinkornanteil auch Magnesiumaluminat-Spinell und/oder Sinterspinell und/oder Schmelzspinell vorhanden sein.

Der Gewichtsanteil des Magnesiumaluminat-Spinells im Feinkornanteil der Materialmischung liegt erfindungsgemäß im Bereich von 70% bis 100% und der Gewichtsanteil des Zirkonoxids an dem Feinkornanteil im Bereich von 0% bis 30%. Dabei muss der Gewichtsanteil des Zirkonoxids >12 % sein.

Sowohl im Grobkornanteil, als auch im Feinkornanteil kann der Magnesiumaluminat-Spinell insbesondere einen Gewichtsanteil von 66 bis 78 % Aluminiumoxid (Al₂O₃) sowie einen Gewichtsanteil an Magnesiumoxid (MgO) von 22 bis 34 % aufweisen.

Mit der erfindungsgemäßen Materialmischung lässt sich ein thermoshock- und korrosionsbeständiger Keramikwerkstoff herstellen, der sich insbesondere zum Herstellen von Feuerfestformkörpern wie etwa Hitzeschildelementen für Gasturbinen eignet. Das Zirkonoxid in der Materialmischung dient zur Steigerung der Korrosionsbeständigkeit und insbesondere durch die Ausbildung von Mikrorissen in der Matrix zur Ausbildung einer hohen Temperaturwechselbeständigkeit. Insgesamt lässt sich die Materialmischung daher dazu verwenden, Feuerfestformkörper, insbesondere Hitzeschildelemente für Gasturbinen, herzustellen, die gegenüber herkömmlichen Feuerfestformkörpern eine erhöhte Lebensdauer aufweisen. Insbesondere wird durch den Einsatz von Spinell der Abbau des Mullits und des Korunds unterbunden, wobei jedoch die grundsätzlichen Hitzeschildeigenschaften erhalten bleiben.

Als Folge der längeren Lebensdauer sind längere Inspektionsintervalle möglich, was die Betriebskosten einer Gasturbine senkt. Aus der Materialmischung können aber neben geformten Erzeugnissen auch ungeformte Erzeugnisse für die Energietechnik, die Metallurgie, die Automobilindustrie, die Glas- und Zementindustrie sowie die chemische Industrie hergestellt werden. Die erfindungsgemäße Materialmischung kann insbesondere auch ohne Verwendung eines kalziumhaltigen Bindemittels verarbeitet werden.

Gemäß einem zweiten Aspekt der Erfindung wird ein Verfahren zum Herstellen eines Feuerfestformkörpers, insbesondere eines Hitzeschildelementes für Hochtemperaturgasreaktoren, wie etwa Gasturbinenbrennkammern, zur Verfügung gestellt. In dem erfindungsgemäßen Verfahren findet die erfindungsgemäße Materialmischung Verwendung. Der Materialmischung wird wenigstens ein Dispergiermittel und/oder wenigstens ein Hilfsstoff auf organischer oder anorganischer Basis zugegeben, um eine formbare Masse zu erhalten. Anschließend wird die formbare Masse geformt und gesintert. Als Hilfsstoff kann hierbei beispielsweise kalzinierter Spinell, der eine sinterfördernde Hilfsphase darstellt, zur Anwendung kommen. Gegenüber Sinterspinell weist kalziniertes Spinellpulver eine beträchtlich höhere spezifische Oberfläche auf und ist somit reaktionsfähiger.

Durch die Verwendung der erfindungsgemäßen Materialmischung lässt sich mit dem erfindungsgemäßen Verfahren ein Feuerfestformkörper herstellen, der gegenüber herkömmlichen Feuerfestformkörpern die oben genannten Vorteile, insbesondere eine längere Lebensdauer und längere Inspektionsintervalle, aufweist.

Das Formen der formbaren Masse kann insbesondere durch einen Gießprozess erfolgen, wobei Vibrationsgießen als das am meisten geeignete Formgebungsverfahren angesehen wird.

Nach dem Formen der formbaren Masse wird vorzugsweise ein Abbinden herbeigeführt, bevor der Sinterprozess erfolgt. Das Abbinden ermöglicht das Herausnehmen der geformten Masse aus der Form vor dem Brennen, so dass wiederverwendbare Formen zum Einsatz kommen können.

Das Sintern erfolgt vorzugsweise bei Temperaturen oberhalb 1.550°C, so dass keine unreagierten Bestandsteile von Magnesiumoxid oder Aluminiumoxid in dem fertigen Produkt anzutreffen sind.

Gemäß dem dritten Aspekt der Erfindung wird ein Feuerfestformkörper für Hochtemperaturgasreaktoren zur Verfügung gestellt. Dieser weist ein Keramikvolumen auf, dass Spinell und Zirkonoxid umfasst. Weiter umfasst das Keramikvolumen einen Grobkornanteil mit einem Gewichtsanteil oberhalb von 50 % und einen Feinkornanteil. Der Grobkornanteil weist Grobkörner mit Abmessungen größer 20 µm, der Feinkornanteil Feinkörner mit Abmessungen kleiner 20 µm. Beispielswiese kann der Grobkornanteil Grobkörner mit Abmessungen im Bereich von 20 µm bis 6 mm aufweisen, insbesondere im Bereich von 100 µm bis 6 mm.

Als Grobkornanteil kann hierbei insbesondere Magnesiumaluminat-Spinell und/oder Sinterspinell und/oder Schmelzspinell vorhanden sein. Als Feinkornanteil ist Magnesiumaluminat-Spinell und/oder Sinterspinell und/oder Schmelzspinell vorhanden.

In dem Feinkornanteil liegt ein Gewichtsanteil von 70 bis 100 % Magnesiumaluminat-Spinell und ein Gewichtsanteil > 12 % und bis 30 % Zirkonoxid vor. Sowohl im Grobkornanteil als auch im Feinkornanteil kann der Magnesiumaluminat-Spinell einen Gewichtsanteil Aluminiumoxid von 66 bis 78 % und einen Gewichtsanteil Magnesiumoxid von 22 bis 34 % aufweisen.

Ein erfindungsgemäßer Feuerfestformkörper weist gegenüber herkömmlichen Feuerfestformkörpern die bereits mit Bezug auf das Verfahren zu seiner Herstellung sowie mit Bezug auf die Materialmischung beschriebenen Vorteile, insbesondere eine längere Lebensdauer und ein längeres Inspektionsintervall, auf.

Weitere Merkmale, Eigenschaften und Vorteile der vorliegenden Erfindung ergeben sich aus der nachfolgenden Beschreibung von Ausführungsbeispielen unter Bezugsnahme auf die beiliegenden Figuren.
Fig. 1 zeigt einen erfindungsgemäßen Feuerfestformkörper in einer schematischen Darstellung.
Fig. 2 zeigt ein Ablaufdiagramm für das erfindungsgemäße Verfahren zum Herstellen eines Feuerfestformkörpers.

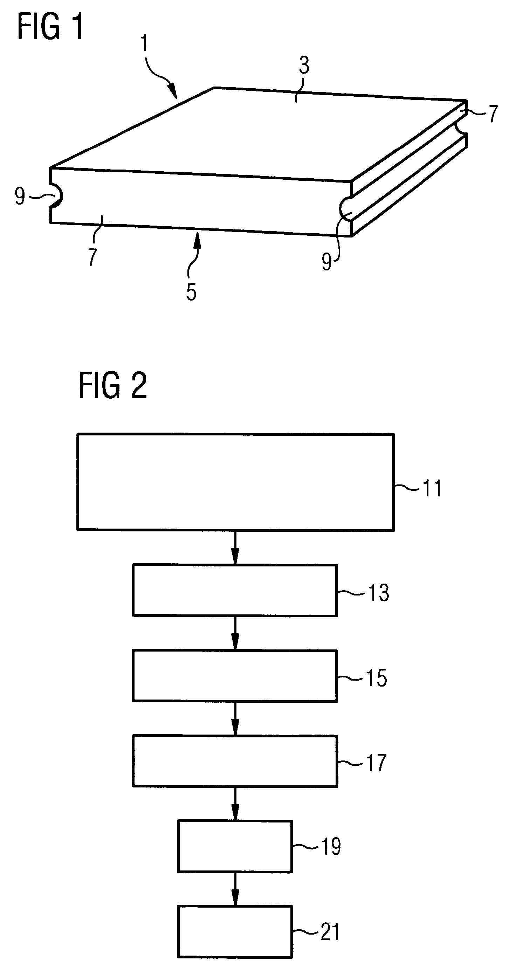

Fig. 1 zeigt in einer schematisierten Darstellung ein Hitzeschildelement für eine Gasturbinenbrennkammer als ein Ausführungsbeispiel für einen erfindungsgemäßen Feuerfestformkörper. Das in Fig. 1 dargestellte Hitzeschildelement 1 weist eine Heißseite 3, die dem Brennkammerinneren zuzuwenden ist, eine Kaltseite 5, die der Tragstruktur der Brennkammer zuzuwenden ist, und vier Umfangsseiten 7 auf. In zwei der Umfangsseiten 7 sind Nuten 9 vorhanden, die den Eingriff einer das Hitzeschildelement 1 an der Tragstruktur haltenden Halteklammer ermöglichen. Selbstverständlich können auch andere Haltemöglichkeiten zur Anwendung kommen, bei denen die Nuten 9 nicht notwendig sind. Beispielsweise kann die Kaltseite 5 des Hitzeschildelementes 1 mit der Tragstruktur verschraubt werden.

Das Hitzeschildelement 1 besteht aus einer Keramik, auf der Basis von Spinell und Baddeleyit, also monoklinem Zirkonoxid. Zur Gruppe der Spinelle gehört eine große Anzahl von Verbindungen, die durch einen gemeinsamen Kristallstrukturtyp charakterisiert sind. Spinell ist sowohl der Einzelname des kubisch-hexakies-oktaetrischen Magnesiumaluminats-Spinells (MgAl₂O₄), als auch der Gruppenname für die mit dem Magnesiumaluminat-Spinell isotype und mit ihm untereinander mischbaren Oxide der allgemeinen Form AB₂O₄, wobei für A die häufigsten Kationen Mg²⁺, Mn²⁺, Fe²⁺, Co²⁺, Zn²⁺ und Ni²⁺ sind und für B Al³⁺, Ga³⁺, Cr³⁺ und Fe³⁺. Spinelle finden eine breite technische Anwendung, zum Beispiel als Ferrite in der Elektrotechnik als Magnetwerkstoffe, Chromite und Magnesiumaluminate als Feuerfestwerkstoffe in der Gießerei, in der Stahl- und Nichteisenmetallurgie, Kobaltite als Katalysatoren und Manganate als Thermistoren.

Magnesiumaluminat-Spinell setzt sich theoretisch aus einem Gewichtsanteil von 28,2 % MgO und einem Gewichtsanteil von 71,8 % Al₂O₃ (Korund) zusammen und schmilzt bei 2.135°C auf. Magnesiumaluminat-Spinell kann beträchtliche Mengen an Aluminiumoxid (Al₂O₃) unter Mischkristallbildung aufnehmen, wobei Magnesiumoxid (MgO) nur bei hohen Temperaturen im geringen Maß in Magnesiumaluminat-Spinell eingebaut wird. Magnesiumaluminat-Spinelle bilden sich in geringem Maße schon bei Temperaturen oberhalb 1.300°C, in stärkerem Umfang jedoch erst oberhalb ca. 1.550°C. Dabei ist von großem technologischem Interesse, dass bei der Reaktion zwischen Magnesiumoxid und Aluminiumoxid zu Magnesiumaluminat-Spinell eine Volumenzunahme von ca. 5 bis 15 Vol.-% stattfindet.

Rohstoffhaltig unterscheidet man zwischen Sinterspinell, Schmelzspinell und kalziniertem Spinell, sowie bezüglich der Zusammensetzung zwischen magnesiumoxidreichen Spinellen, die einen Aluminiumoxidgehalt kleiner 71,8 Gew.-% aufweisen, und aluminiumoxidreichen Magnesiumaluminat-Spinellen, die einen Aluminiumoxidgehalt größer 71,8 Gew.-% aufweisen.

Die Spinellstruktur von Magnesiumaluminat-Spinellen ist unempfindlich gegen starke Fehlordnung und gegen erhebliche Gitterdeformationen. Aufgrund hoher Symmetrie ist das Spinellgitter sehr stabil. Als feuerfester Werkstoff ist Spinell insbesondere wegen seiner hohen Temperaturbeständigkeit und seiner guten Korrosionsbeständigkeit gegenüber basischen Schlacken geeignet. Spinell ist beständig gegenüber allen Metallen mit Ausnahme der Erdalkalimetalle. Dabei weist Spinell eine größere Korrosionsbeständigkeit gegenüber dem Alkalimetall-Angriff als Korund und Chromerz auf. Aus der Literatur geht hervor, dass keine chemischen Reaktionen auftreten, wenn reiner Magnesiumaluminat-Spinell bei Temperaturen bis ca. 1.200°C in Kontakt mit Sulfaten, Hydrogensulfaten, Fluoriden, Chloriden, Carbonaten und Hydroxiden des Natrium, Kaliums, Lithiums und Kalziums kommt.

Im vorliegenden Ausführungsbeispiel weist das Keramikmaterial des Hitzeschildelementes Grobkörner mit Abmessungen im Bereich zwischen 20 µm und 6 mm, insbesondere im Bereich zwischen 100 µm und 6 mm, sowie Feinkörper mit Abmessungen unter 20 µm auf.

Das Hitzeschildelement 1 aus Fig. 1 kann mit dem erfindungsgemäßen Verfahren zum Herstellen eines Feuerfestformkörpers hergestellt werden. Dieses Verfahren wird nachfolgend mit Bezug auf das Ablaufdiagramm aus Fig. 2 beschrieben.

Ausgangspunkt für das erfindungsgemäße Verfahren ist eine erfindungsgemäße Materialmischung, die Spinell und Zirkondioxid umfasst. Die Mischung weist Grobkörner mit Abmessungen zwischen 20 µm und 6 mm sowie Feinkörner mit Abmessungen kleiner 20 µm auf. Im vorliegenden Ausführungsbeispiel ist der Feinkornanteil eine Mischung aus Magnesiumaluminat-Spinell und Zirkonoxid, wobei der Gewichtsanteil des Magnesiumaluminat-Spinells 70 bis 100 % beträgt und der Gewichtsanteil des Zirkonoxids 0 bis 30 %. Dieser Materialmischung wird in einem ersten Schritt ein Dispergiermittel sowie Wasser zugegeben (Schritt 11 in Fig. 2). Das resultierende Gemisch ist nachfolgend beispielhaft wiedergegeben (Gewichtsanteile in Prozent), wobei die Abkürzung AR78 für Spinell mit 78 % Aluminiumoxid und 22 bis 23 % Magnesiumoxid steht und die Abkürzung MR66 für magnesiumreichen Spinell mit einem Gewichtsanteil von 66 % Aluminiumoxid und einem Gewichtsanteil von 32 bis 33,5 Gew.-% Magnesiumoxid steht:

| | |
|---|---|
| AR78 mit Korngrößen von 1 bis 3 mm | 18,6 % |
| AR78 mit Korngrößen von 0,5 bis 1 mm | 11,3 % |
| AR78 mit Korngrößen von ≤ 0,5 mm | 11,3 % |
| MR66 mit Korngrößen < 1 mm | 17 % |
| Al₂O₃ mit Korngrößen < 10 µm | 7,3 % |
| MgO | 4 % |
| Dispergiermittel | 1 % |
| Al₂O₃ mit Korngrößen < 20 µm | 2,5 % |
| ZrO₂ | 18 % |
| Wasser | 9 %. |

Dieses Gemisch wird dann in einem Erich-Mischer für 4 Minuten homogenisiert (Schritt 13), bevor es unter Vibration in eine metallische Gießform eingegossen wird (Schritt 15). Um eine zu schnelle Austrocknung der in der Gießform befindlichen Gießmasse zu vermeiden, wird die Gießform im Angussbereich luftdicht verschlossen. Anschließend wird die Gießmasse in der Form für ca. zwei Stunden bei 40°C ausgelagert (Schritt 17). Dadurch setzt das Abbinden der Gießmasse ein und sorgt dafür, dass ein Grünling entsteht, der die für das anschließende Ausformen nötige Festigkeit aufweist. Nachdem der Grünling ausgeformt ist, wird dieser für weitere 30 bis 50 Stunden zuerst bei Temperaturen im Bereich zwischen 20 und 60°C, dann bei Temperaturen im Bereich zwischen 90 und 130°C getrocknet (Schritt 19). Schließlich wird der Grünling bei einer Temperatur von über 1.550°C über mehr als drei Stunden gebrannt (Schritt 21). Das so erzeugte keramische Hitzeschildelement hat eine Kaltbiegefestigkeit von ca. 15 MPa und einen dynamischen E-Modul von ca. 50 GPa.

Folgende Schritte können hinsichtlich des Verfahrens besonders vorteilhaft sein:
1. Um den Spinellwerkstoff hinsichtlich seines Elastizitätsmoduls und damit auch seiner Thermoschockbeständigkeit an die Randbedingungen in der Brennkammer einer stationären Gasturbine anzupassen, ist die Zugabe von bis zu 1 Gew% eines Porosierungsmittels besonders vorteilhaft. Als Porosierungsmittel können verschiedene Kunststoffe (Polypropylen, Polyethylen Polystyrol (Styropor), Polymethylmethacrylat (Acrylglas), etc.) oder Naturcellulose.
2. Die Thermowechselbeständigkeit kann ebenfalls positiv durch Erhöhung des Grobkornanteils des Spinellwerkstoffs beeinflusst werden. Besonders günstig ist eine Erhöhung des Grobkornanteils im Bereich 54 Gew% auf 70 Gew%.

Die mit Bezug auf die Figuren beschriebene Erfindung stellt einen thermoschock- und korrosionsbeständigen Keramikwerkstoff auf der Basis eines Magnesiumaluminat-Spinells mit einer Beimengung an Zirkondioxid und bestehend aus Grob- und Feinkörnungen zur Verfügung. Aus dem Keramikwerkstoff können geformte oder ungeformte Erzeugnisse für die Energietechnik, die Metallurgie, die Automobilindustrie, die Glas- und Zementindustrie und die chemische Industrie hergestellt werden. Er kann als wärmedämmendes Hitzeschild in Gasturbinen, als Tauschausguss oder Auslaufdüse in der Metallurgie, als poröser Filterkörper in der Heißgasfiltration, etc. eingesetzt werden. Die Korrosionsbeständigkeit dieses Spinellwerkstoffs wird durch Vermeidung von Si02 Zusätzen (frei oder gebunden), sowie möglichst geringen CaO Anteil, deutlich erhöht.

## Patentansprüche

1. Materialmischung zur Herstellung eines Feuerfestwerkstoffes, welche Spinell und Zirkonoxid sowie einen Grobkornanteil mit einem Gewichtsanteil oberhalb von 50% und einen Feinkornanteil umfasst, wobei der Grobkornanteil Grobkörner mit Abmessungen größer 20µm und der Feinkornanteil Feinkörner mit Abmessungen kleiner 20µm aufweist, wobei als Feinkornanteil Magnesiumaluminat-Spinell und/oder Sinterspinell und/oder Schmelzspinell vorhanden ist bzw. sind, und wobei der Feinkornanteil einen Gewichtsanteil von 70 bis 100% Magnesiumaluminat-Spinell und einen Gewichtsanteil >12% und bis 30% Zirkonoxid aufweist.

2. Materialmischung nach Anspruch 1, in der
als Grobkornanteil Magnesiumaluminat-Spinell und/oder Sinterspinell und/oder Schmelzspinell vorhanden ist bzw. sind.

3. Materialmischung nach Anspruch 1 oder Anspruch 2, in der
als Feinkornanteil Zirkonoxid vorhanden ist.

4. Verfahren zur Herstellung eines Feuerfestformkörpers unter Verwendung einer Materialmischung nach einem der Ansprüche 1 bis 3, in dem der Materialmischung wenigstens ein Dispergiermittel und/oder wenigstens ein Hilfsstoff auf organischer oder anorganischer Basis zugegeben wird, um eine formbare Masse zu erhalten, und anschließend die formbare Masse geformt und gesintert wird.

5. Verfahren nach Anspruch 4,
**dadurch gekennzeichnet, dass**
die Materialmischung ohne Verwendung eines kalziumhaltigen Bindemittels verarbeitet wird.

6. Verfahren nach Anspruch 4 oder 5,
in dem das Formen durch Gießen erfolgt.

7. Verfahren nach Anspruch 6, in dem das Formen durch Vibrationsgießen erfolgt.

8. Verfahren nach einem der Ansprüche 4 bis 7, in dem nach dem Formen der formbaren Masse ein Abbinden der geformten Masse herbeigeführt wird, bevor diese gesintert wird.

9. Verfahren nach einem der Ansprüche 4 bis 8, in dem das Sintern bei Temperaturen oberhalb von 1550°C erfolgt.

10. Verfahren nach einem der Ansprüche 4 bis 9, umfassend folgende Schritte:
1. Zugabe von bis zu 1 Gewichtsanteil % eines Porosierungsmittels, so dass der Spinellwerkstoff hinsichtlich seines Elastizitätsmoduls und damit auch seiner Thermoschockbeständigkeit an die Randbedingungen in der Brennkammer einer stationären Gasturbine angepasst wird,
2. Erhöhung des Grobkornanteils im Bereich 54 Gewichtsanteil % auf 70 Gewichtsanteil %, so dass die Thermowechselbeständigkeit positiv beeinflusst wird.

11. Verfahren nach Anspruch 10, wobei als Porosierungsmittel verschiedene Kunststoffe (Polypropylen, Polyethylen Polystyrol (Styropor), Polymethylmethacrylat (Acrylglas), etc.) oder Naturcellulose verwendet wird.

12. Feuerfestformkörper für Hochtemperaturgasreaktoren, welcher ein Keramikvolumen aufweist, das Spinell und Zirkonoxid umfasst,
**dadurch gekennzeichnet, dass**
er mittels einer Materialmischung nach einem der Ansprüche 1 bis 3 und/oder durch ein Verfahren nach einem der Ansprüche 4 bis 11 hergestellt ist.

## Claims

1. Material mixture for producing a refractory material, comprising spinel and zirconium oxide and a coarse-grained fraction in a percentage by weight of over 50% and a fine-grained fraction, the coarse-grained fraction having coarse grains with dimensions greater than 20 µm and the fine-grained fraction having fine grains with dimensions of less than 20 µm, wherein magnesium aluminate spinel and/or sinter spinel and/or fused spinel is/are present as the fine-grained fraction, and wherein the fine-grained fraction has 70 to 100 wt% magnesium aluminate spinel and >12 wt% and up to 30 wt% zirconium oxide.

2. Material mixture according to claim 1, in which magnesium aluminate spinel and/or sinter spinel and/or fused spinel is/are present as the coarse-grained fraction.

3. Material mixture according to claim 1 or claim 2, in which zirconium oxide is present as the fine-grained fraction.

4. Method for producing a refractory moulded body using a material mixture according to one of claims 1 to 3, in which there is added to the material mixture at least one dispersing agent and/or at least one organically or inorganically based auxiliary agent in order to obtain a mouldable composition, and the mouldable composition is then formed and sintered.

5. Method according to claim 4,
**characterised in that**
the material mixture is processed without using a calcium-containing binder.

6. Method according to claim 4 or 5,
in which forming is performed by casting.

7. Method according to claim 6, in which forming is performed by vibration casting.

8. Method according to one of claims 4 to 7, in which after forming of the mouldable composition, hardening of the moulded composition is initiated before it is sintered.

9. Method according to one of claims 4 to 8, in which sintering takes place at temperatures above 1550°C.

10. Method according to one of claims 4 to 9, comprising the following steps:
1. Adding up to 1 wt% of a porosising agent so that the spinel material is matched to the conditions in the combustion chamber of a stationary gas turbine in respect of its elastic modulus and therefore also of its thermal shock resistance,
2. Increasing the coarse-grained fraction within the range 54 to 70 wt% so that the thermal shock resistance can be positively influenced.

11. Method according to claim 10, wherein various plastics (polypropylene, polyethylene, polystyrene (styrofoam), polymethyl methacrylate (acrylic glass), etc.) or natural cellulose are used as a porosising agent.

12. Refractory moulded body for high-temperature gas reactors, having a ceramic volume comprising spinel and zirconium oxide, **characterised in that**
it is produced by means of a material mixture according to one of claims 1 to 3 and/or by a method according to one of claims 4 to 11.

## Revendications

1. Mélange de matière pour la fabrication d'un matériau réfractaire, qui comprend du spinelle et de l'oxyde de zirconium ainsi qu'une proportion de grains grossiers en une proportion en poids supérieur à 50% et une proportion de grains fins, la proportion de grains grossiers ayant des grains grossiers de dimension supérieure à 20 µm et la proportion de grains fins des grains fins ayant des dimensions plus petites que 20 µm, dans lequel il y a comme proportion de grains fins du spinelle d'aluminate de magnésium et/ou du spinelle fritté et/ou du spinelle fondu et dans lequel la proportion de grains fins a une proportion en poids de 70 à 100% de spinelle d'aluminate de magnésium et une proportion en poids supérieure à 12% et allant jusqu'à 30% d'oxyde de zirconium.

2. Mélange de matière suivant la revendication 1, dans lequel il y a comme proportion de grains grossiers du spinelle d'aluminate de magnésium et/ou du spinelle fritté et/ou du spinelle fondu.

3. Mélange de matière suivant la revendication 1 ou 2, dans lequel il y a de l'oxyde de zirconium comme proportion de grains fins.

4. Procédé de fabrication d'une pièce moulée réfractaire en utilisant un mélange de matière suivant l'une des revendications 1 à 3, dans lequel on ajoute au mélange de matière au moins un agent dispersant et/ou au moins un adjuvant à base organique ou minérale pour obtenir une composition démoulable et ensuite on moule la composition moulable et on la fritte.

5. Procédé suivant la revendication 4, **caractérisé en ce qu'**on traite le mélange de matière sans utiliser de liant contenant du calcium.

6. Procédé suivant la revendication 4 ou 5, dans lequel on effectue le moulage par coulée.

7. Procédé suivant la revendication 6, dans lequel on effectue le moulage par coulée par vibrations.

8. Procédé suivant l'une des revendications 4 à 7, dans lequel on provoque après le moulage de la composition moulable un durcissement de la composition moulée avant de la fritter.

9. Procédé suivant l'une des revendications 4 à 8, dans lequel on effectue le frittage à des températures supérieures à 1550°C.

10. Procédé suivant l'une des revendications 4 à 9, comprenant les stades suivants :
1. addition jusqu'à une proportion en poids en% d'un agent porogène de manière à adapter le module d'élasticité du matériau de spinelle et ainsi également sa résistance au choc thermique aux conditions limites dans la chambre de combustion d'une turbine à gaz fixe,
2. augmentation de la proportion de grains grossiers dans la plage de 54% en proportion en poids à 70% en proportion en poids, de manière à influencer positivement la résistance aux changements de température.

11. Procédé suivant la revendication 10, dans lequel on utilise comme agent porogène diverses matières plastiques (polypropylène, polyéthylène polystyrène(styropor), poly(méthacrylate de méthyle), verre acrylique, etc.) ou de la cellulose naturelle.

12. Pièce moulée réfractaire pour des réacteurs à gaz à haute température, qui a un volume de céramique qui comprend du spinelle et de l'oxyde de zirconium,
**caractérisée en ce que**
elle est fabriquée au moyen d'un mélange de matières suivant l'une des revendications 1 à 3 et/ou par un procédé suivant l'une des revendications 4 à 11.
